# EUROPEAN PATENT APPLICATION

(11) **EP 3 792 511 A1**
(43) Date of publication of application: **17.03.2021**
(21) Application number: 19212892.4
(22) Date of filing: 02.12.2019
(51) Int. Cl.: F16C 19/06, F16C 33/38, F16C 33/44

(54) **GENERATOR BEARING**

(30) Priority: 10.09.2019 US 201916565975
(71) Applicant: Hamilton Sundstrand Corporation, Charlotte, NC 28217-4578 (US)
(72) Inventor: QIU, Liangheng, Prairie Grove, IL 60012 (US); DANCKERS, Erika M., Rockford, IL 61103 (US); FRIEL, Sean, Rockfrod, IL 61108 (US)
(74) Representative: Dehns

(57) **Abstract**

A ball bearing assembly including an inner race (108) configured to support an input shaft (116) extending through a center axis of the ball bearing assembly, an outer race (106) configured to couple to a bearing support fixture (112), a bearing cage including a porous metal disposed between the inner race and outer race, the bearing cage having a plurality of apertures spaced apart from one another by a predetermined distance (118), and a plurality of ball elements (114), each ball element disposed in a respective aperture to define an internal radial clearance that is maintained in response to a misalignment of the input shaft.

## Description

### Background

### Technological Field

The present disclosure relates to a ball bearing, and more particularly to a variable frequency starter generator ball bearing.

### Description of Related Art

Variable Frequency Starter Generators (VFSGs) are utilized as part of an electrical generating system of an aircraft to output variable frequency power over the engine normal operating speed range. The variable frequency generator typically includes an input shaft that is rotatably connected to an engine accessory gearbox. A shaft bearing is concentrically mounted on the input shaft to facilitate the input shaft rotation.

Recent VFSG designs include a detachable drive shaft coupled to one end of the input shaft. This design allows for one end of the input shaft to be disconnected from the drive shaft if a fault in the VFSG is detected, while the opposite end of the input shaft remains coupled to the gearbox. In this configuration, the input shaft continues spinning even after being disconnected from the drive shaft as it is still driven by the gearbox, while the drive shaft stops rotating after decoupling from the input shaft. Further, the input shaft may become misaligned relative to the engine gearbox drive shaft due to positional and diametrical size tolerances, thereby placing an undesirable load on the input shaft bearing. Accordingly, the input shaft bearing must maintain proper operation after the input shaft is disconnected to prevent damage to the gearbox.

Recent designs require an input bearing having a limited bearing space and a high speed application. A common configuration of bearing parameters does not fit to an input bearing to be successfully in recent design requirements, specifically the Boeing 787 VFSG. There is a need in the art for a bearing having improved reliability and smaller envelope. There also remains a need in the art for such a bearing assembly and components that are economically viable. The present disclosure may provide a solution for at least one of these remaining challenges.

### Summary of the Invention

A generator assembly includes generator housing including a bearing support fixture coupled thereto, ball bearing including an outer race and an inner race defining a bore having a bore diameter, the outer race coupled to the bearing support structure the inner race configured to rotate about a center axis, the inner and outer races defining a track therebetween that supports a plurality of ball elements, an input shaft extending through the bore along the center axis and including a first end configured to rotatably couple to a gearbox, a bearing cage including a porous metal within the ball bearing for supporting the plurality of ball elements such that they maintain an internal radial clearance between the inner and outer races in response to a misalignment of the input shaft in a radial direction with respect to the center axis. A raceway curvature can be defined by a ratio of a raceway radius to a ball bearing diameter, wherein the inner raceway curvature is between 53.6% and 55.8% and the outer raceway curvature is between 53.6% and 55.8%. A radial clearance between the inner race and each ball element and the outer race and each ball element can be between 0.075 and 0.095 millimeters and a raceway height is between 18% and 20% over the ball diameter. It is also conceived that a clearance between a ball element and the inner race is a quarter of a clearance between the inner race and the outer race. The assembly can define an envelope having an outer diameters of 62 mm and an inner diameter of 40 mm.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:

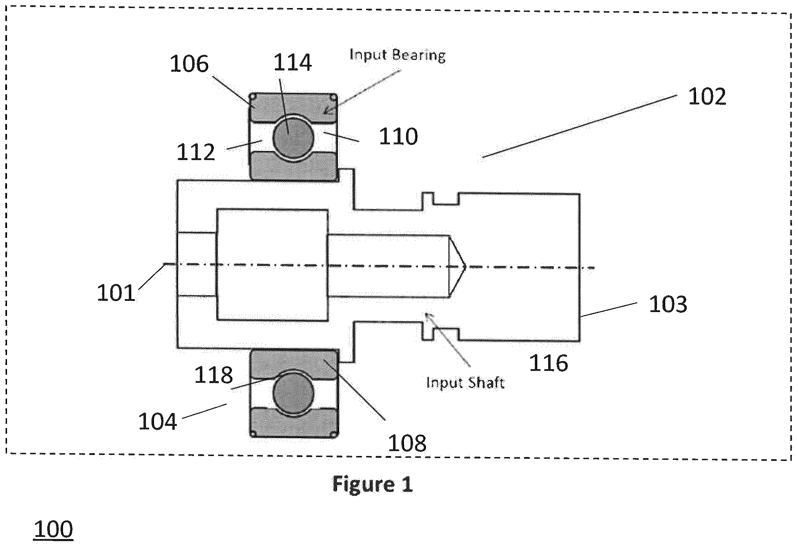

Fig. 1 is a side view of an input shaft/ball bearing assembly.

### Detailed Description

Reference will now be made to the drawings wherein like reference numerals identify similar structural features or aspects of the subject invention. For purposes of explanation and illustration, and not limitation, a partial view of an exemplary embodiment of a bearing assembly in accordance with the invention is shown in Fig. 1 and is designated generally by reference character 100.

Fig. 1 shows a generator assembly 100, including a generator housing 102 including a ball bearing assembly 104 coupled thereto. The ball bearing assembly 104 includes an outer race 106 and an inner race 108 defining a bore 110 having a bore diameter (Db) . The inner race 108 is configured to rotate about a center axis 101. The inner 108 and outer races 106 define a track 112 therebetween that supports a plurality of ball elements 114. An input shaft 116 extends through the bore 110 along the center axis and includes a first end 103 configured to be rotatably couple to a gearbox (not shown). The ball bearing assembly 104 includes a porous metal for supporting the plurality of ball elements 114 such that they maintain an internal radial clearance 118 between the inner 108 and outer races 106 in response to a misalignment of the input shaft 116 in a radial direction with respect to the center axis. The porous metal can be sintered bronze.

Each of the ball elements 114 can be approximately 3/16 inches (1.59mm) and fit within a raceway curvature is defined by a ratio of a raceway radius to a ball element diameter. The raceway curvature is between approximately 53.6% and 55.8% for both inner race and outer race, inclusive. A radial clearance is between 0.075 and 0.095 millimeters. A raceway height is defined as the depth from the land surface to the raceway lowest or upper most point divided by the ball diameter. The raceway height in this instance is between 18% and 20%. A clearance 118 between a ball element 114 and the inner race 108 is a quarter of a clearance between the inner race 108 and the outer race 106. The ball bearing assembly 104 fits within an envelope having an outer diameters of 62 mm and an inner diameter of 40 mm. The ball bearing assembly 104 is capable of operating between 7,200 to 17,500 rpm and lasting greater than 82,000 hours, while maintaining a misalignment of up to 0.0060 in/in.

The methods and systems of the present disclosure, as described above and shown in the drawings, provide for electrical power system with superior properties including increased reliability and stability, and reduced size, weight, complexity, and/or cost. While the apparatus and methods of the subject disclosure have been showing and described with reference to embodiments, those skilled in the art will readily appreciate that changes and/or modifications may be made thereto without departing from the scope of the invention as defined by the claims.

## Claims

1. A ball bearing assembly comprising:
an inner race (108) configured to support an input shaft (116) extending through a center axis of the ball bearing assembly;
an outer race (106) configured to couple to a bearing support fixture (112);
a porous metal disposed between the inner race and the outer race, the bearing cage having a plurality of apertures spaced apart from one another by a selected distance (118); and
a plurality of ball elements (114), each ball element disposed in a respective aperture to define an internal radial clearance that is maintained in response to a radial misalignment of the input shaft.

2. The ball bearing assembly of claim 1, wherein the porous material is sintered bronze.

3. The ball bearing assembly of claim 1 or 2, wherein each of the ball elements is 3/16 inches in diameter?

4. The ball bearing assembly of any preceding claim, wherein a raceway curvature is defined by a ratio of a raceway radius to a ball element diameter, wherein the raceway curvature is between 53.6% and 55.8%, inclusive.

5. The ball bearing assembly of any preceding claim, wherein a radial clearance between the inner race and each ball element and the outer race and each ball element is between 0.075 and 0.095 millimeters.

6. The ball bearing assembly of any preceding claim, wherein a raceway height is between 18% and 20% over the ball diameter.

7. The ball bearing assembly of any preceding claim, wherein a clearance between a ball element and the inner race is a quarter of a clearance between the inner race and the outer race.

8. The ball bearing assembly of any preceding claim, wherein the assembly defines an envelope having an outer diameters of 62 mm and an inner diameter of 40 mm.

9. A generator assembly, comprising:
a generator housing including a bearing support fixture coupled thereto;
a ball bearing assembly including an outer race and an inner race defining a bore having a bore diameter, the outer race coupled to the bearing support structure the inner race configured to rotate about a center axis, the inner and outer races defining a track therebetween that supports a plurality of ball elements;
an input shaft extending through the bore along the center axis and including a first end configured to rotatably couple to a gearbox; and
a bearing cage including a porous metal within the ball bearing for supporting the plurality of ball elements such that they maintain an internal radial clearance between the inner and outer races in response to a misalignment of the input shaft in a radial direction with respect to the center axis.

10. The ball bearing assembly of claim 10, wherein a raceway curvature is defined by a ratio of a raceway radius to a ball bearing diameter, wherein the inner raceway curvature is between 53.6% and 55.8%, inclusive.

11. The ball bearing assembly of claim 10 or 11, wherein the outer raceway curvature is between 53.6% and 55.8%, inclusive.
